(19) **Europäisches Patentamt / European Patent Office / Office européen des brevets**

(11) **EP 4 013 951 B1**

(12) **FASCICULE DE BREVET EUROPEEN**

(45) Date de publication et mention de la délivrance du brevet:
**12.06.2024 Bulletin 2024/24**

(21) Numéro de dépôt: **20761625.1**

(22) Date de dépôt: **07.08.2020**

(51) Classification Internationale des Brevets (IPC):
**G01B 21/08** $^{(2006.01)}$  **F01D 5/14** $^{(2006.01)}$

(52) Classification Coopérative des Brevets (CPC):
**F01D 5/141; G01B 21/08;** F05D 2260/80

(86) Numéro de dépôt international:
**PCT/FR2020/051450**

(87) Numéro de publication internationale:
**WO 2021/028637 (18.02.2021 Gazette 2021/07)**

(54) **PROCEDE DE CALCUL DE L'EPAISSEUR DES BORDS DE FUITE ET D'ATTAQUE SUR UN PROFIL D'AUBE**

VERFAHREN ZUR BERECHNUNG DER DICKE DER HINTERKANTE UND DER VORDERKANTE AN EINEM SCHAUFELPROFIL

METHOD FOR CALCULATING THE THICKNESS OF THE TRAILING AND LEADING EDGES ON A BLADE PROFILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.08.2019 US 201962886227 P**

(43) Date de publication de la demande:
**22.06.2022 Bulletin 2022/25**

(73) Titulaires:
• **Safran Aero Composite**
  **75015 Paris (FR)**
• **SAFRAN AIRCRAFT ENGINES**
  **75015 Paris (FR)**
• **Safran Aerospace Composites**
  **Rochester, New Hampshire 03867 (US)**

(72) Inventeurs:
• **LE CLOAREC, Damien, Vincent**
  **77550 MOISSY-CRAMAYEL (FR)**
• **GIACOVELLI, Clément**
  **77550 MOISSY-CRAMAYEL (FR)**
• **SHERMAN, Jeffrey, Steven**
  **77550 MOISSY-CRAMAYEL (FR)**
• **THOMAS, Mickaëlle, Lucie, Alicia**
  **77550 MOISSY-CRAMAYEL (FR)**

(74) Mandataire: **Cabinet Beau de Loménie**
  **158, rue de l'Université**
  **75340 Paris Cedex 07 (FR)**

(56) Documents cités:
**EP-A- 0 126 576     EP-A1- 1 749 969**
**EP-A1- 2 816 430**

**Description**

Arrière-plan de l'invention

L'invention concerne la vérification de la conformité d'un profil aérodynamique d'une aube ou d'un redresseur, notamment pour une turbomachine d'un aéronef.

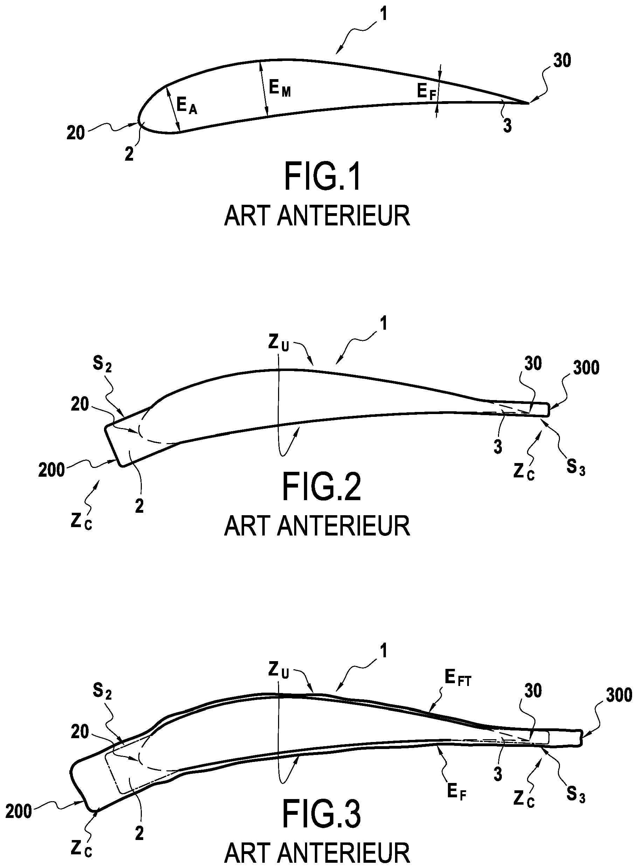

Une roue à aubes définit une direction axiale formant l'axe de révolution de la roue à aubes et une direction radiale dans laquelle s'étendent les aubes de la roue à aubes. Dans le cadre de la vérification de la conformité des aubes fans, il est d'usage de vérifier plusieurs épaisseurs sur différentes sections de l'aube, les sections étant prises par exemple dans des plans orthogonaux à la direction radiale de chaque aube. A chacune des différentes section d'une aube, on vérifie ainsi l'épaisseur $E_F$ au bord de fuite, l'épaisseur maximum $E_M$ de la pièce, et l'épaisseur $E_A$ au bord d'attaque, comme cela est illustré sur la figure 1 qui présente une vue en coupe d'une aube 1 selon un plan comprenant une direction s'étendant du bord d'attaque 2 au bord de fuite 3 de l'aube 1 et orthogonal à la direction s'étendant entre le pied d'aube et la tête d'aube, soit la direction radiale d'une roue à aubes sur laquelle serait montée l'aube 1. Sur la figure 1, ainsi que sur la figures suivantes, la direction axiale porte la référence $D_A$ et la direction radiale porte la référence $D_R$.

En général, les épaisseurs de bord d'attaque et de bord de fuite sont respectivement construites à partir d'un point de bord d'attaque et d'un point de bord de fuite situés respectivement à une certaine distance de l'extrémité 20 du bord d'attaque 2 et de l'extrémité 30 du bord de fuite 3. Par extrémité 20 du bord d'attaque 2, on entend la partie la plus en amont de l'aube 1 selon la direction axiale $D_A$ et dans un sens de flux allant du bord d'attaque 2 vers le bord de fuite 3. Par extrémité 30 du bord de fuite 3, on entend ici la partie la plus en aval de l'aube 1 selon la direction axiale $D_A$ et dans un sens de flux allant du bord d'attaque 2 vers le bord de fuite 3.

Sur une pièce brute, en fonction du procédé de fabrication du profil, des sur-longueurs $S_2$ et $S_3$, c'est-à-dire un excédent de matière, peuvent être présentes respectivement sur le bord d'attaque 2 et sur le bord de fuite 3 comme illustré sur la figure 2 qui présente le profil de la pièce brute en train plein et le profil de la pièce finie en trait pointillé. Ces zones sont des zones chutées de matière $Z_C$, non fonctionnelles et retirées lors de l'usinage. Les zones s'étendant sur les parties concaves et convexes de l'aube 1 entre le bord d'attaque et le bord de fuite de la pièce finie sont des zones dites utiles $Z_U$.

Dans ce cas, les constructions d'épaisseurs du bord d'attaque 2 et du bord de fuite 3 tiennent compte des sur-longueurs $S_2$ et $S_3$, mais utilisent les valeurs théoriques de sur-longueur.

Si l'on prend par exemple le cas d'un besoin fonctionnel sur profil fini de vérifier l'épaisseur du bord d'attaque $E_A$ et l'épaisseur du bord de fuite $E_F$ respectivement à un point de bord d'attaque situé à 10 mm de l'extrémité 20 du bord d'attaque 2 et à un point de bord de fuite situé à 10 mm de l'extrémité 30 du bord de fuite 3 comme indiqué sur la figure 1.

Par besoin fonctionnel, on entend la tenue mécanique et la performance aérodynamique du profil : une sous-épaisseur peut entraîner un déficit de résistance mécanique de la pièce, et des épaisseurs trop importantes de matière font baisser le rendement.

Sur le profil de la pièce brute illustré sur la figure 2, les sur-longueurs $S_2$ et $S_3$ de fabrication sont de 15mm à chaque extrémité 200 et 300 à l'étape brute. Les extrémités 200 et 300 du bord d'attaque et du bord de fuite 2 et 3 de la pièce brute sont différentes des extrémités 20 et 30 du bord d'attaque et du bord de fuite 2 et 3 de la pièce finie. Autrement dit, l'extrémité 200 du bord d'attaque 2 de la pièce brute est distante de 15 mm de l'extrémité 20 du bord d'attaque 2 de la pièce finie. De même, l'extrémité 300 du bord d'attaque 3 de la pièce brute est distante de 15 mm de l'extrémité 30 du bord d'attaque 3 de la pièce finie.

Par conséquent, les épaisseurs de bord d'attaque et de bord de fuite $E_A$ et $E_F$ seront donc mesurées sur la pièce brute à 25 mm des extrémités 200 et 300 correspondantes, en tenant compte de la distance sur pièce finie de distance de 10mm pour la prise d'épaisseur, pour vérifier les épaisseurs $E_A$ et $E_F$ obtenues sur la pièce finie.

La problématique technique rencontrée est la variabilité importante des sur-longueurs réelles sur les pièces brute, au regard des sur-longueurs théorique. Il peut y avoir plusieurs millimètres de variation d'une pièce à l'autre sur cette zone de chute.

Etant donné la méthode de construction des épaisseurs de bord d'attaque et de bord de fuite $E_A$ et $E_F$, une variation importante de la position du point de bord de fuite ou de bord d'attaque sur le profil brut réel par rapport à un profil brut théorique entraine un décalage du point de bord de fuite et du point de bord d'attaque, et donc une erreur dans la mesure des épaisseurs de bord d'attaque et de bord de fuite sur le profil $E_A$ et $E_F$.

Sur l'exemple illustré sur la figure 3, le profil brut réel en trait plein se superpose relativement bien avec le profil brut théorique en trait mixte au niveau des zones utiles concaves et convexes, et les épaisseurs de bord d'attaque $E_A$, de bord de fuite $E_F$ et maximale $E_M$, sont relativement proches. Cependant, du fait d'une sur-longueur excessive à chacune des deux extrémités 200 et 300 des bords d'attaque et de fuite 2 et 3, les épaisseurs de bord d'attaque et de bord de fuite $E_A$ et $E_F$ mesurées seront relativement différentes des épaisseurs théoriques $E_{AT}$ et $E_{FT}$ correspondantes.

Et par conséquent, la pièce sera vue en écart alors qu'elle ne l'est pas.

Document EP 1 749 969 A1 divulgue un procédé de contrôler des aubes selon des paramètres aérodynamiques pertinents en des points essentiels pour les qualités aérodynamiques de l'aube.

Objet et résumé de l'invention

L'invention vise à pallier les inconvénients mentionnés ci-dessus et à passer outre les difficultés mentionnées ci-dessus en proposant un procédé vérification de la conformité du profil aérodynamique d'une aube d'une turbomachine d'un aéronef ne mesurant que les zones utiles des pièces destinées à former les aubes, c'est-à-dire uniquement les zones fonctionnelles, notamment afin de réduire les temps de contrôle géométrique des pièces et gagner en efficacité pour la fabrication d'une aube.

Un objet de l'invention propose un procédé de vérification de la conformité du profil aérodynamique d'une aube réelle d'une turbomachine d'un aéronef par rapport à une aube théorique, comprenant

- une détermination, pour une pluralité de sections de l'aube, d'une épaisseur de l'aube réelle et d'une épaisseur de l'aube théorique correspondante pour une pluralité de points sur une courbe squelette de l'aube correspondante, l'épaisseur étant la dimension de l'aube s'étendant perpendiculairement à la courbe squelette en chaque point de la courbe squelette,
- une comparaison de l'épaisseur de l'aube réelle et de l'épaisseur de l'aube théorique pour chaque point de la courbe squelette de chaque section,

une détermination de la conformité du profil aérodynamique de l'aube réelle à partir du résultat de la comparaison pour chaque point de la courbe squelette de chaque section de l'aube.

Selon une caractéristique générale de l'invention, la détermination, pour chaque section, d'une épaisseur de l'aube réelle et d'une épaisseur de l'aube théorique correspondante pour une pluralité de point sur une courbe squelette de l'aube correspondante comprend :

- une construction d'une courbe squelette de l'aube théorique et une construction d'une courbe squelette de l'aube réelle,
- une construction d'une loi d'épaisseur de l'aube théorique et une construction d'une loi d'épaisseur de l'aube réelle, la loi d'épaisseur d'une aube correspondant à la courbe de l'épaisseur de l'aube en fonction de la longueur curviligne de la courbe squelette depuis un bord d'attaque de l'aube vers un bord de fuite de l'aube, de préférence dans le sens du flux,
- une superposition de la loi d'épaisseur de l'aube réelle sur la loi d'épaisseur de l'aube théorique, à partir d'une fonction des moindres carrés, et
- une extraction des épaisseurs de bord d'attaque et de bord de fuite de la section d'aube, l'extraction étant réalisée en déterminant la valeur sur la loi d'épaisseur de l'aube réelle correspondant respectivement à la position d'un point de bord d'attaque et d'un point de bord de fuite sur l'aube théorique prédéterminés.

Le procédé selon l'invention permet ainsi de réduire les temps de contrôle géométrique des pièces en se basant uniquement sur les zones utiles des pièces destinées à former les aubes. Le procédé est ainsi plus rapide que les procédé de l'état de la technique mentionnés ci-dessus qui faisaient l'acquisition des zones chutées sur les pièces brutes. Le procédé selon l'invention s'exempte de prise de repères par rapport aux bords d'attaque et de fuite sur les pièces.

La fonction des moindres carrés correspond à une optimisation de minimisation de la somme des écarts entre les épaisseurs de l'aube réelle et de l'aube théorique en carrés de la différence de la loi d'épaisseur réelle moins la loi d'épaisseur théorique, soit l'équation suivante :

$$S(x) = min \sum Real\ Thickness_X - Theoritical\ Thickness_X$$

Avec « Real Thickness $_x$» l'épaisseur de l'aube réelle à une position x de la courbe squelette de l'aube réelle, et « Theoretical Thickness $_x$ » l'épaisseur de l'aube théorique à la même position x de la courbe squelette de l'aube théorique, la fonction minimum, et S(x) l'écart pour chaque position x le long de la courbe squelette.

La construction de la courbe squelette d'une aube, théorique ou réelle, peut être réalisée par différentes méthodes comme, par exemple, la méthode des cercles bitangents ou la méthode de la courbe moyenne. Dans la méthode dites des cercles bitangents, les cercles sont bitangents à la courbe de l'intrados et de l'extrados. Sur chaque cercle ainsi crée, on récupère le centre. En avançant avec un pas assez fin, on génère la courbe squelette. La méthode de la courbe moyenne consiste à avoir le point de symétrie entre les points sur le profil intrados et extrados.

La construction de la loi d'épaisseur de l'aube théorique est réalisée à partir des données renseignées dans une base de données relative au profil d'aube souhaité. La construction de la loi d'épaisseur de l'aube réelle en revanche peut être réalisée en considérant pour chaque distance curviligne du squelette, l'épaisseur du profil réel mesurée de manière perpendiculaire au squelette.

Une autre méthode envisageable pour la construction de la loi d'épaisseur de l'aube réelle est de construire un cercle bitangent à la courbe intrados et extrados, un cercle ayant son centre compris sur le squelette, et ainsi construire la loi d'épaisseur comme étant le diamètre du cercle bitangent en fonction de la distance curviligne du centre sur le squelette.

Dans un autre objet de l'invention, il est proposé un procédé de fabrication d'une aube d'une turbomachine d'un aéronef, comprenant le moulage d'une aube réelle, un procédé de vérification de la conformité du profil aérodynamique de l'aube réelle par rapport à une aube théorique tel que défini ci-dessus, et un usinage de l'aube réelle si l'aube est considérée comme conforme à l'issu dudit procédé de vérification.

Brève description des dessins.

L'invention sera mieux comprise à la lecture faite ci-après, à titre indicatif mais non limitatif, en référence aux dessins annexés sur lesquels :

- la figure 1 présente une vue en coupe d'une aube selon un plan comprenant une direction s'étendant du bord d'attaque au bord de fuite de l'aube et orthogonal à la direction s'étendant entre le pied d'aube et la tête d'aube selon l'art antérieur ;
- la figure 2 présente une vue en coupe d'une pièce brute théorique avant l'usinage de l'aube selon l'art antérieur ;
- la figure 3 présente une vue en coupe d'une superposition d'une pièce brute réelle et d'une pièce brute théorique avant l'usinage de l'aube selon l'art antérieur ;
- la figure 4 présente un logigramme d'un procédé de fabrication d'une aube selon un mode de mise en oeuvre de l'invention ;
- la figure 5 présente un logigramme d'un procédé de vérification de la conformité du profil aérodynamique d'une aube réelle d'une turbomachine d'un aéronef par rapport à une aube théorique selon un mode de mise en oeuvre de l'invention ;
- la figure 6 est une représentation graphique d'une courbe d'épaisseur en fonction de la longueur curviligne de la courbe squelette pour l'aube réelle et pour l'aube théorique après la superposition à l'aide d'une fonction des moindres carrés ;
- la figure 7 est illustrée une représentation graphique d'une courbe d'épaisseur en fonction de la longueur curviligne de la courbe squelette pour l'aube réelle et pour l'aube théorique avant la superposition à l'aide d'une fonction des moindres carrés.

Description détaillée de modes de réalisation

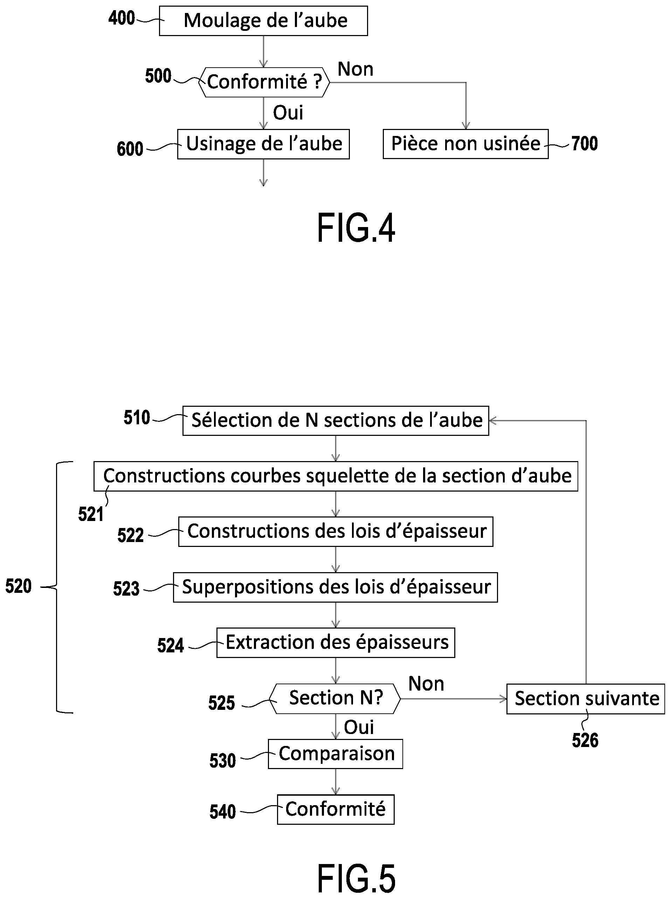

La figure 4 présente un logigramme d'un procédé de fabrication d'une aube selon un mode de mise en oeuvre de l'invention.

Dans le mode de mise en oeuvre illustré sur la figure 4, le procédé de fabrication comprend une première étape 400 de moulage d'une aube réelle. A l'issu du moulage, la pièce brute obtenue est démoulée pour être soumise à une vérification de conformité 500 avant son usinage éventuel 600 si la pièce brute est considérée comme conforme à l'issu du procédé de vérification de conformité à l'étape 500. Si la pièce brute n'est pas considérée comme conforme à l'issue du procédé de vérification de conformité de l'étape 500, l'aube ne sera pas usinée (étape 700).

La figure 5 présente un logigramme selon un mode de mise en oeuvre de l'invention, du procédé de vérification de la conformité du profil aérodynamique d'une aube réelle d'une turbomachine d'un aéronef par rapport à une aube théorique mis en oeuvre à l'étape 500 du procédé de fabrication illustré sur la figure 4.

Le procédé de vérification de la conformité du profil aérodynamique comprend, dans une première étape 510, une sélection de N sections de la pièce brute démoulée destinée à être usinée en aube.

Dans une étape suivante 520, on détermine pour chacune des N sections d'aube, une épaisseur de l'aube réelle et une épaisseur de l'aube théorique correspondante pour la section de l'aube théorique correspondante pour une pluralité de point sur une courbe squelette de l'aube correspondante. L'épaisseur correspond à la dimension de l'aube s'étendant perpendiculairement à la courbe squelette en chaque point de la courbe squelette.

Pour réaliser la détermination de l'étape 520, on construit tout d'abord, dans une étape 521, une courbe squelette de l'aube théorique et une courbe squelette de l'aube réelle pour la section d'aube correspondante.

Puis, dans une étape suivante 522, on construit une loi d'épaisseur de l'aube théorique et une loi d'épaisseur de l'aube réelle, la loi d'épaisseur d'une aube correspondant à la courbe de l'épaisseur de l'aube en fonction de la longueur curviligne de la courbe squelette depuis un bord d'attaque de l'aube vers un bord de fuite de l'aube.

Ensuite, dans une étape 523, on superpose la loi d'épaisseur de l'aube réelle sur la loi d'épaisseur de l'aube théorique à l'aide d'une fonction des moindres carrés.

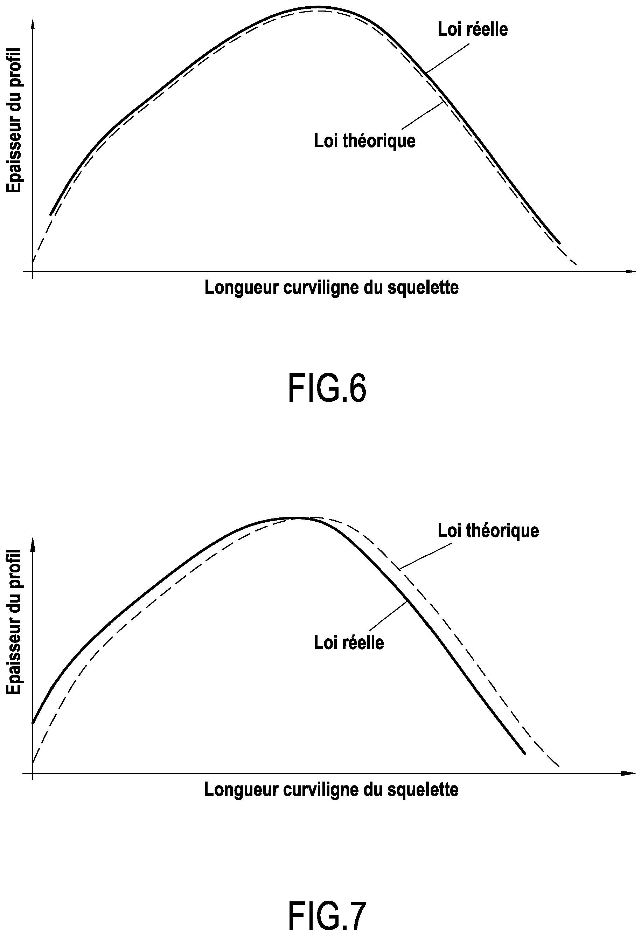

Enfin, dans une étape 524, on extrait les épaisseurs de bord d'attaque et de bord de fuite de la section d'aube en déterminant la valeur sur la loi d'épaisseur de l'aube réelle correspondant respectivement à la position d'un point de bord d'attaque et d'un point de bord de fuite sur l'aube théorique prédéterminés comme illustré sur la figure 6 qui est une représentation graphique d'une courbe d'épaisseur en fonction de la longueur curviligne de la courbe squelette pour l'aube réelle en trait plein et pour l'aube théorique en trait pointillés telle qu'obtenue à l'issue de l'étape 523 de superposition à l'aide d'une fonction des moindres carrés.

Sur la figure 7 est illustrée une représentation graphique d'une courbe d'épaisseur en fonction de la longueur curviligne de la courbe squelette pour l'aube réelle en trait plein et pour l'aube théorique en trait pointillés avant l'étape 523 de superposition à l'aide d'une fonction des moindres carrés.

Dans une étape suivante 525, on vérifie si les épaisseurs ont été déterminées pour toutes les sections de l'aube. Si ce n'est pas le cas, on passe à la section suivante dans un étape 526 et on reprend les étapes 521 à 525.

En revanche, si la détermination des épaisseurs a été réalisée pour toutes les sections de l'aube, on compare ensuite, dans une étape 530, l'épaisseur de l'aube réelle et de l'épaisseur de l'aube théorique pour chaque point de la courbe squelette de chaque section.

Dans une étape suivante 540, on détermine enfin si le profil aérodynamique de l'aube réelle est conforme au profil théorique à partir du résultat de la comparaison pour chaque point de la courbe squelette de chaque section de l'aube déterminé à l'étape précédente 530. Autrement dit, on regarde si l'écart entre le profil réel et le profil théorique est compris dans l'intervalle de tolérance admis à la définition de la pièce pour statuer sur la conformité.

L'invention propose ainsi un procédé de vérification de la conformité du profil aérodynamique d'une aube d'une turbomachine d'un aéronef ne mesurant que les zones utiles des pièces destinées à former les aubes, c'est-à-dire uniquement les zones fonctionnelles. Le procédé selon l'invention permet ainsi de réduire les temps de contrôle géométrique des pièces en se basant uniquement sur les zones utiles des pièces destinées à former les aubes. Le procédé est ainsi plus rapide que les procédé de l'état de la technique mentionnés ci-dessus qui faisaient l'acquisition des zones chutées sur les pièces brutes. Le procédé selon l'invention s'exempte de prise de repères par rapport aux bords d'attaque et de fuite sur les pièces.

**Revendications**

1. Procédé (500) de vérification de la conformité du profil aérodynamique d'une aube réelle d'une turbomachine d'un aéronef par rapport à une aube théorique, comprenant :

 - une détermination (520), pour une pluralité de sections de l'aube, d'une épaisseur de l'aube réelle et d'une épaisseur de l'aube théorique correspondante pour une pluralité de points sur une courbe squelette de l'aube correspondante, l'épaisseur étant la dimension de l'aube s'étendant perpendiculairement à la courbe squelette en chaque point de la courbe squelette,
 - une comparaison (530) de l'épaisseur de l'aube réelle et de l'épaisseur de l'aube théorique pour chaque point de la courbe squelette de chaque section,
 - une détermination (540) de la conformité du profil aérodynamique de l'aube réelle à partir du résultat de la comparaison pour chaque point de la courbe squelette de chaque section de l'aube,
 **caractérisé en ce que** la détermination (520), pour chaque section, d'une épaisseur de l'aube réelle et d'une épaisseur de l'aube théorique correspondante pour une pluralité de point sur une courbe squelette de l'aube correspondante comprend :

  - une construction (521) d'une courbe squelette de l'aube théorique et une construction d'une courbe squelette de l'aube réelle,
  - une construction (522) d'une loi d'épaisseur de l'aube théorique et une construction d'une loi d'épaisseur de l'aube réelle, la loi d'épaisseur d'une aube correspondant à la courbe de l'épaisseur de l'aube en fonction de la longueur curviligne de la courbe squelette depuis un bord d'attaque de l'aube vers un bord de fuite de l'aube,
  - une superposition (523) de la loi d'épaisseur de l'aube réelle sur la loi d'épaisseur de l'aube théorique à partir d'une fonction des moindres carrés, et
  - une extraction (524) des épaisseurs de bord d'attaque et de bord de fuite de l'aube réelle de la section d'aube, l'extraction (524) étant réalisée en déterminant la valeur sur la loi d'épaisseur de l'aube réelle correspondant respectivement à la position d'un point de bord d'attaque et d'un point de bord de fuite sur l'aube théorique prédéterminés,

la fonction des moindres carrés correspondant à l'équation suivante :

$$-S(x) = min \sum Real\ Thickness_X - Theoritical\ Thickness_X$$

avec « Real Thickness $_x$» l'épaisseur de l'aube réelle à une position x de la courbe squelette de l'aube réelle, et « Theoretical Thickness $_x$ » l'épaisseur de l'aube théorique à la même position x de la courbe squelette de l'aube théorique, la fonction minimum, et S(x) l'écart pour chaque position x le long de la courbe squelette.

2. Procédé de fabrication d'une aube d'une turbomachine d'un aéronef, comprenant le moulage (400) d'une aube réelle, un procédé (500) de vérification de la conformité du profil aérodynamique de l'aube réelle par rapport à une aube théorique selon la revendication 1, et un usinage (600) de l'aube réelle si l'aube est considérée comme conforme à l'issu dudit procédé de vérification.


**Patentansprüche**

1. Verfahren (500) zur Überprüfung der Übereinstimmung des aerodynamischen Profils einer tatsächlichen Schaufel eines Turbinentriebwerks eines Luftfahrzeugs in Bezug auf eine theoretische Schaufel, umfassend:

   - Bestimmen (520), für mehrere Querschnitte der Schaufel, einer Dicke der tatsächlichen Schaufel und einer Dicke der entsprechenden theoretischen Schaufel für mehrere Punkte auf einer Skelettkurve der entsprechenden Schaufel, wobei die Dicke die Abmessung der Schaufel ist, die sich an jedem Punkt der Skelettkurve senkrecht zur Skelettkurve erstreckt,
   - Vergleichen (530) der Dicke der tatsächlichen Schaufel und der Dicke der theoretischen Schaufel für jeden Punkt der Skelettkurve von jedem Querschnitt,
   - Bestimmen (540) der Übereinstimmung des aerodynamischen Profils der tatsächlichen Schaufel ausgehend von dem Ergebnis des Vergleichens für jeden Punkt der Skelettkurve von jedem Schaufelquerschnitt,

   **dadurch gekennzeichnet, dass** das Bestimmen (520), für jeden Querschnitt, einer Dicke der tatsächlichen Schaufel und einer Dicke der entsprechenden theoretischen Schaufel für mehrere Punkte auf einer Skelettkurve der entsprechenden Schaufel umfasst:

   - Konstruieren (521) einer Skelettkurve der theoretischen Schaufel und Konstruieren einer Skelettkurve der tatsächlichen Schaufel,
   - Konstruieren (522) eines Dickengesetzes der theoretischen Schaufel und Konstruieren eines Dickengesetzes der tatsächlichen Schaufel, wobei das Dickengesetz einer Schaufel der Kurve der Dicke der Schaufel in Abhängigkeit von der gekrümmten Länge der Skelettkurve ausgehend von einer Vorderkante der Schaufel hin zu einer Hinterkante der Schaufel entspricht,
   - Überlagern (523) des Dickengesetzes der tatsächlichen Schaufel über dem Dickengesetz der theoretischen Schaufel ausgehend von einer Funktion der kleinsten Quadrate, und
   - Extrahieren (524) der Vorderkanten- und Hinterkantendicken der tatsächlichen Schaufel von dem Schaufelquerschnitt, wobei das Extrahieren (524) durch Bestimmen des Werts auf dem Dickengesetz der tatsächlichen Schaufel ausgeführt wird, welcher der Position eines vorbestimmten Vorderkantenpunktes beziehungsweise eines vorbestimmten Hinterkantenpunktes auf der theoretischen Schaufel entspricht,

   wobei die Funktion der kleinsten Quadrate der folgenden Gleichung entspricht:

   $$S(x) = min \sum Real\ Thickness_x - Theoretical\ Thickness_x$$

   mit "Real Thickness$_x$", der Dicke der tatsächlichen Schaufel an einer Position x der Skelettkurve der tatsächlichen Schaufel, und "Theoretical Thickness$_x$", der Dicke der theoretischen Schaufel an der gleichen Position x der Skelettkurve der theoretischen Schaufel, der Minimalfunktion und S(x), dem Abstand für jede Position x entlang der Skelettkurve.

2. Verfahren zur Herstellung einer Schaufel eines Turbinentriebwerks eines Luftfahrzeugs, welches das Formen (400) einer tatsächlichen Schaufel, ein Verfahren (500) zur Überprüfung der Übereinstimmung des aerodynamischen Profils der tatsächlichen Schaufel in Bezug auf eine theoretische Schaufel nach Anspruch 1 und ein Bearbeiten (600) der tatsächlichen Schaufel, wenn die Schaufel als Ergebnis des Überprüfungsverfahrens als übereinstimmend betrachtet wird, umfasst.

**Claims**

1. A verification method (500) for verifying whether the aerodynamic profile of a real blade for an aircraft turbine engine complies with a theoretical blade, the method comprising:

   · for a plurality of sections of the blade, determining (520) a thickness of the real blade and a thickness of the corresponding theoretical blade at a plurality of points along a camber line of the corresponding blade, where thickness is the dimension of the blade extending perpendicularly to the camber line at each point of the camber line;
   · comparing (530) the thickness of the real blade with the thickness of the theoretical blade for each point of the camber line of each section; and
   · determining (540) whether the aerodynamic profile of the real blade is in compliance from the result of the comparison of each point of the camber line of each section of the blade;
   the method being **characterized in that**, for each section, a thickness of the real blade and a thickness of the corresponding theoretical blade for a plurality of points along a camber line of the corresponding blade are determined (520) by:

   · constructing (521) a camber line of the theoretical blade and constructing a camber line of the real blade;
   · constructing (522) a relationship for the thickness of the theoretical blade and constructing a relationship for the thickness of the real blade, the thickness relationship of a blade corresponding to the curve plotting the thickness of the blade as a function of curvilinear length along the camber line from a leading edge of the blade to a trailing edge of the blade;
   · superposing (523) the thickness relationship of the real blade on the thickness relationship of the theoretical blade by using a least-squares superposition function; and
   · extracting (524) the leading-edge and trailing-edge thicknesses of the real blade at the blade section by determining the values on the thickness relationship of the real blade that correspond respectively to the predetermined positions of a leading edge point and of a trailing edge point on the theoretical blade,

   the least-squares superposition function corresponding to the following equation:

$$S(x) = min \sum Real\,Thickness_X - Theoritical\,Thickness_X$$

   with "Real Thickness$_x$" the thickness of the real blade at a position $\underline{x}$ along the camber line of the real blade, "Theoretical Thickness$_x$" the thickness of the theoretical blade at the same position $\underline{x}$ along the camber line of the theoretical blade, the minimum function, and S(x) the difference for each position $\underline{x}$ along the camber line.

2. A method of fabricating a blade for an aircraft turbine engine, the method comprising molding (400) a real blade, performing a verification method (500) according to claim 1 for verifying whether the aerodynamic profile of the real blade complies with a theoretical blade.

**FIG.1**
ART ANTERIEUR

**FIG.2**
ART ANTERIEUR

**FIG.3**
ART ANTERIEUR

400 — Moulage de l'aube

500 — Conformité ? — Non

Oui

600 — Usinage de l'aube

Pièce non usinée — 700

# FIG.4

510 — Sélection de N sections de l'aube

Constructions courbes squelette de la section d'aube

521

522 — Constructions des lois d'épaisseur

520

523 — Superpositions des lois d'épaisseur

524 — Extraction des épaisseurs

525 — Section N? — Non — Section suivante

526

Oui

530 — Comparaison

540 — Conformité

# FIG.5

Epaisseur du profil

Loi réelle

Loi théorique

Longueur curviligne du squelette

FIG.6

Epaisseur du profil

Loi théorique

Loi réelle

Longueur curviligne du squelette

FIG.7

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1749969 A1